# EUROPEAN PATENT SPECIFICATION

(11) **EP 1 605 234 B1**
(45) Date of publication and mention of the grant of the patent: **18.04.2007**
(21) Application number: 05012445.2
(22) Date of filing: 09.06.2005
(51) Int. Cl.: G01D 5/165

(54) **Rotary sensor**
Rotationssensor
Détecteur de rotation

(30) Priority: 10.06.2004 JP 2004172766
(43) Date of publication of application: 14.12.2005
(73) Proprietor: ALPS ELECTRIC CO., LTD., Tokyo 145-8501 (JP)
(72) Inventor: Mukaiyama, Ryuji, Ota-ku Tokyo 145-8501 (JP); Hosogoe, Junichi, Ota-ku Tokyo 145-8501 (JP)
(74) Representative: Klunker . Schmitt-Nilson . Hirsch

(56) References cited:
- EP-A- 1 176 397
- EP-A- 1 420 228
- US-A1- 2002 139 179

## Description

### BACKGROUND OF THE INVENTION

### 1. Field of the Invention

The present invention relates to a rotary sensor, and more particularly, to a connecting structure of a driving shaft when a driving force transmitted from outside is transmitted to a rotator by a driving shaft.

### 2. Description of the Related Art

As a structure of a conventional rotary sensor there has been known that the rotary sensor includes a rotator which has an engaging part for engaging a driving shaft such as a slot shaft of a vehicle, a casing which has a chassis rotatably supporting the rotor and a lid closing the opening of the chassis, and an angle detecting unit which is received in the casing and is operated by the rotation of the rotator and has a sliding-element, a resistor pattern and a conductor pattern (for example, see Japanese Patent Unexamined Application Publication No. 2003-233511 and EP-A-1 420 228).

Hereinafter, the structure of the conventional rotary sensor will be described with reference to drawings.

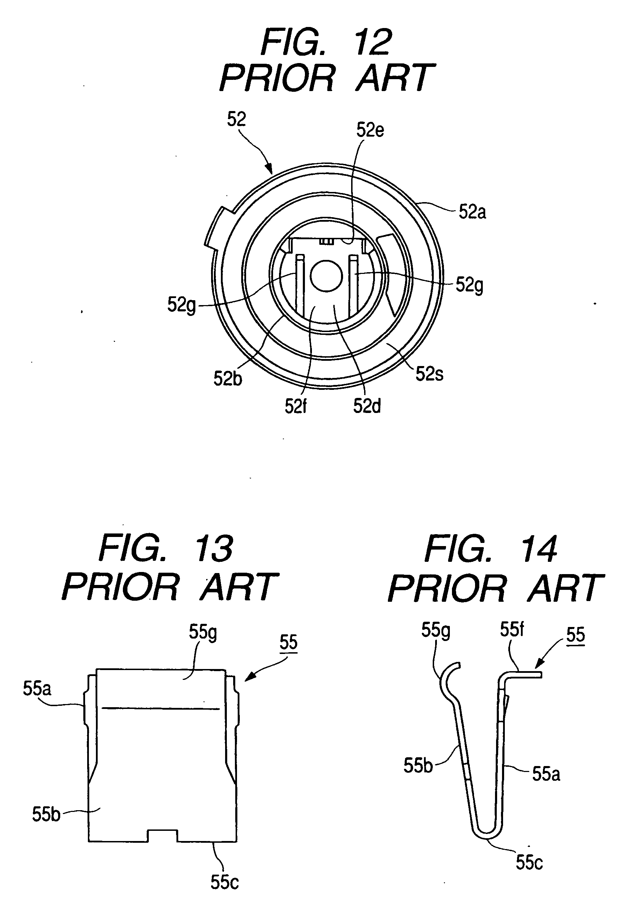

FIG. 11 is a cross-sectional view showing a conventional rotary sensor, FIG. 12 is a plan view showing a rotator, FIG. 13 is a front view showing a first elastic member, and FIG. 14 is a side view showing the first elastic member.

In the drawings, a chassis 51 includes a large-diameter hole 51a, a small-diameter hole 51b and a receiving part 51c communicating with the small-diameter hole 51b. In addition, the lower end 51d of the chassis 51 is opened on the lower side of the receiving part 51c. Further, the small-diameter hole 51b is formed as a through-hole which has a first annular shoulder 51e and a second shoulder 51f smaller than the first shoulder 51e. The first shoulder 51e and the second shoulder 51f serve as supporting parts.

The rotator 52 includes a disk-shaped base 52a, an engaging part 52b located in front of the base 52a, and a shaft 52c located in the rear side of the base 52a. Further, a guard part 52s is provided at the outer circumference of the base 52a. In addition, the engaging part 52b is provided with a concave part 52d having a D-shaped cross-section, a flat surface part 52e that is partially provided in the concave part 52d and is parallel to an axial direction of a rotator 52, and a pair of convex parts 52g projected from the bottom wall 52f of the concave part 52d. The flat surface part 52e is provided parallel to an axial direction of a driving shaft 60. The driving shaft 60 is engaged with the engaging part 52b.

Furthermore, a sliding element 59 is fixed onto the lower surface of the base 52a of the rotator 52. A resistor substrate 53 has a resistor pattern 53b and a conductor pattern 53c which are provided on a surface of a substrate 53a, and a plurality of terminals 53e. A part of an angle detecting unit consists of the sliding element 59 and the resistor substrate 53. When the rotator 52 rotates about the center of the shaft part 52c, the sliding element 59, the resistor pattern 53b and the conductor pattern 53c slide.

A first elastic member 55 includes a flat holding part 55a, a spring part 55b facing the holding part 55a, and a U-shaped bend part 55c connecting the holding part 55a and the spring part 55b. In addition, a free end of the holding part 55a is provided with a stopper 55f extending in the direction perpendicular to the holding part 55a, and a free end of the spring part 55b is provided with an elastic contacting portion 55g. The first elastic member 55 is formed as a leaf spring. The first elastic member 55 is disposed between the flat surface part 52e and a pair of the convex parts 52g so that the bend part 55c abuts a bottom wall 52f of the concave part 52d in the rotator 52.

A lid 57 includes a flat covering part 57a and a cylindrical holding part 57c, and closes an open end 51d on the lower side of the chassis 51. The holding part 57c is provided with a supporting part 58 and the shaft part 52c of the rotator 52 is rotatably supported by the supporting part 58.

The driving shaft 60 includes a cylindrical cylinder part 60a and a driving part 60b having a D-shaped cross section. In addition, a flat part 60c is provided at a part of the outer circumference of the driving part 60b. The driving shaft 60 is engaged with the engaging part 52b of the rotator 52 by the first elastic member 55. In this case, the elastic contacting portion 55g of the spring part 55b of the first elastic member 55 is elastically contacted with the flat part 60c of the driving shaft 60, and the driving shaft 60 is fitted to the engaging part 52b by the elastic member 55. The driving part 60b is disposed in the engaging part 52b in the locking state by fitting the driving shaft 60 using the first elastic member 55.

However, since the above-mentioned structure of the conventional rotary sensor has a structure in which the driving shaft and the rotator are elastically contacted each other to be fitted by the elastic member made of a leaf spring, there has been a problem in that a contact surface (engaging surface) between the leaf spring and the driving shaft or a contact surface between the leaf spring and the rotator are distorted and inclined by the twist of the leaf spring and then a backlash is generated during the reciprocating rotation thereby deteriorating the followingness (hysteresis) of the rotation of the driving shaft.

### SUMMARY OF THE INVENTION

Consequently, the present invention has been made to solve the above-mentioned problems and it is an object of the present invention to provide a rotary sensor which is capable of preventing a backlash occurred during the reciprocating rotation, improving the followingness of the rotation of the driving shaft, and improving hysteresis.

According to a first aspect of the present invention to achieve the above-mentioned object, a rotary sensor includes a chassis having a supporting part, a rotator having an engaging hole and rotatably supported in the chassis, a driving shaft engaged with the engaging hole of the rotator, elastic members held in the engaging hole and transmitting the rotation of the driving shaft to the rotator by elastically contacting with the circumferential surface of the driving shaft, and a rotation detecting means for detecting a rotation of the rotator. The elastic members includes a first elastic member that elastically contacts with and presses one surface of the driving shaft in one direction, and a second elastic member that elastically contacts with another surface perpendicular to the one surface and presses the driving shaft in the direction perpendicular to the pressing direction of the first elastic member. An abutting portion between the driving shaft and the first elastic member is formed as a flat surface and an elastic contacting portion of the first elastic member is formed as a pair of spring pieces facing each other with a slit in the center thereof.

In addition, according to a second aspect of the invention, in the above-mentioned rotary sensor, the driving shaft has a flat surface as a surface facing the abutting portion between the driving shaft and the first elastic member and has a flat surface as an abutment of the engaging holes of the rotator, which is engaged with the abutting portion.

Further, according to a third aspect of the invention, in the above-mentioned rotary sensor, a concave longitudinal groove is formed in the center of the abutment of the engaging hole.

Furthermore, according to a fourth aspect of the invention, in the above-mentioned rotary sensor, elastic force of the first elastic member is greater than that of the second elastic member.

### BRIEF DESCRIPTION OF THE DRAWINGS

Fig. 1 is a plan view showing a rotary sensor according to the present invention;
Fig. 2 is a cross-sectional view showing the rotary sensor according to the invention;
Fig. 3 is a cross-sectional view showing the main parts of the rotary sensor according to the invention;
Fig. 4 is a perspective view showing the rotary sensor according to the invention;
Fig. 5 is a perspective view showing a first elastic member according to the invention;
Fig. 6 is a side view showing the first elastic member according to the invention;
Fig. 7 is a perspective view showing a second elastic member according to the invention;
Fig. 8 is a side view showing the second elastic member according to the invention;
Fig. 9 is a perspective view showing a driving shaft according to the invention;
Fig. 10 is a side view showing the driving shaft according to the invention;
Fig. 11 is a cross-sectional view showing a conventional rotary sensor;
Fig. 12 is a plan view showing the conventional rotary sensor;
Fig. 13 is a front view showing a conventional first elastic member; and
Fig. 14 is a side view showing the conventional first elastic member.

### DESCRIPTION OF THE PREFERRED EMBODIMENT

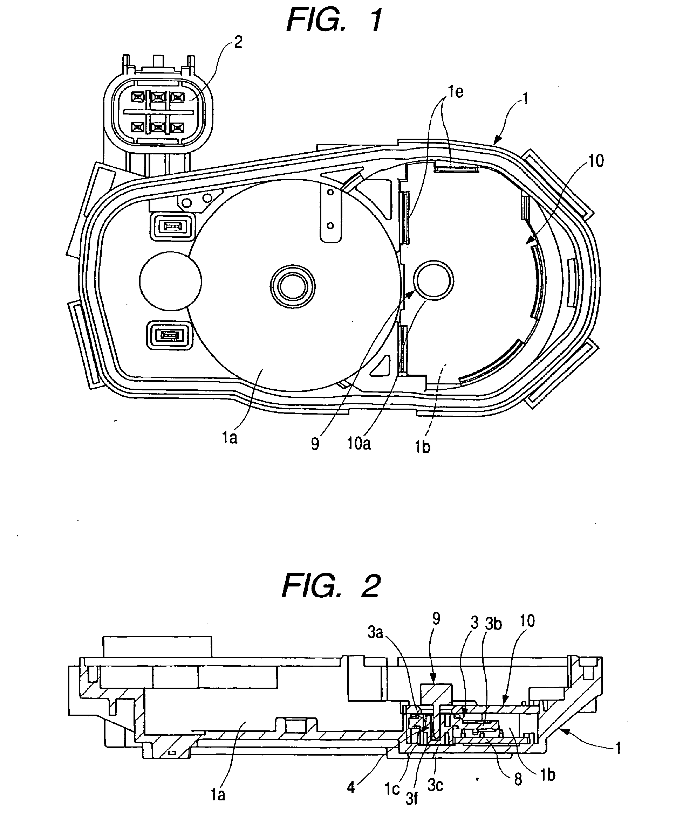

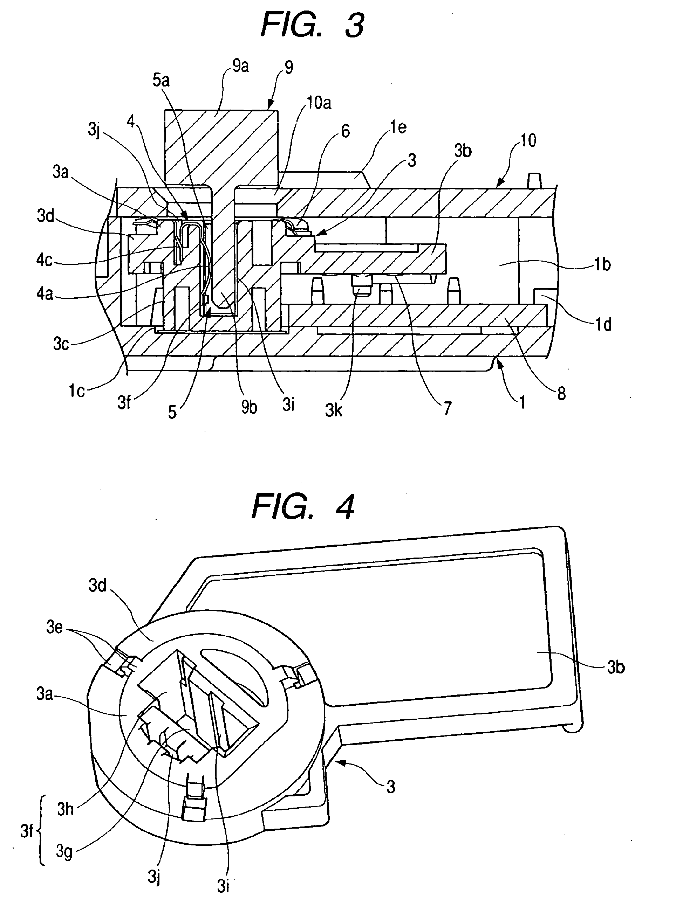

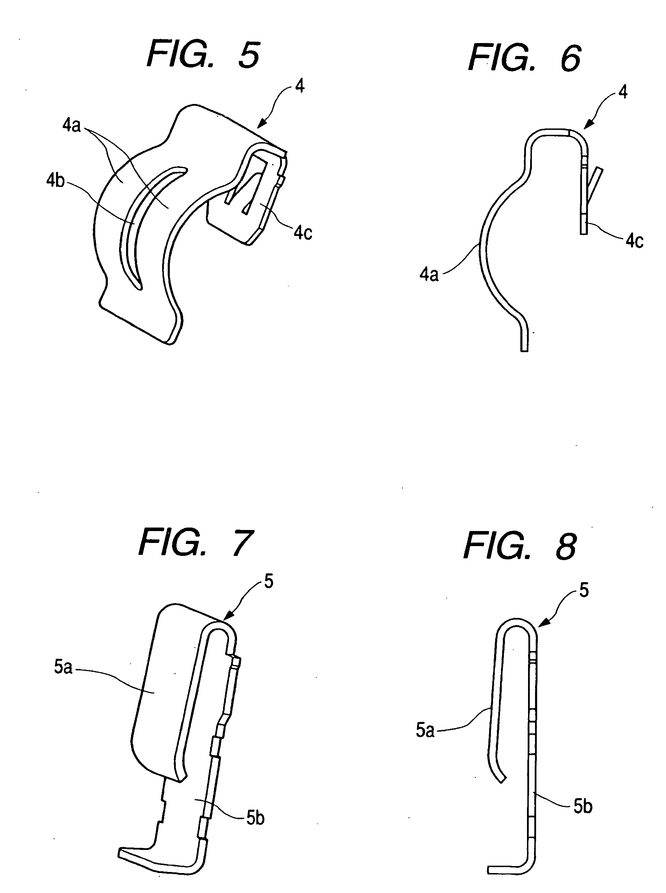

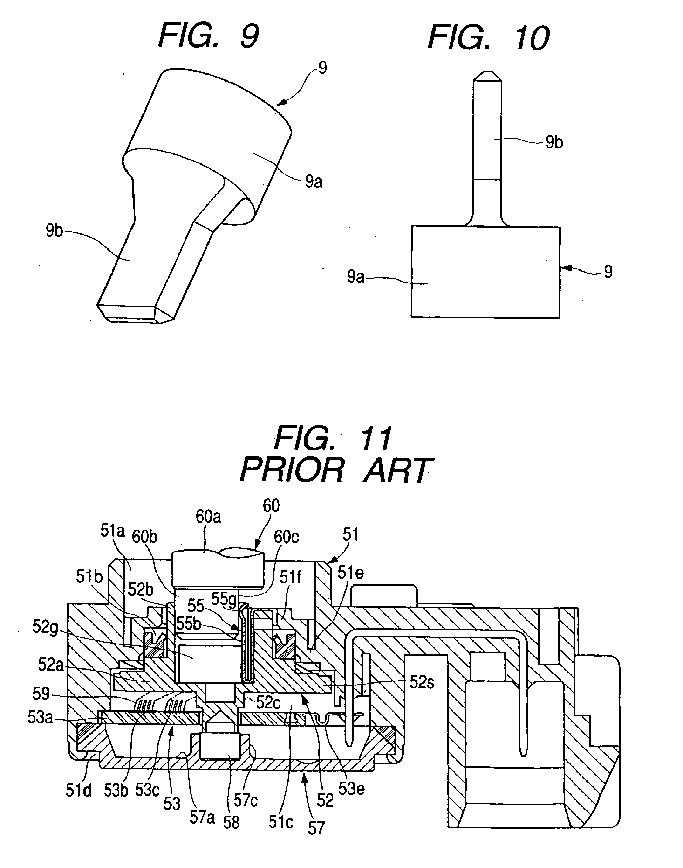

Hereinafter, preferred embodiments of a rotary sensor according to the present invention will be described with reference to FIGS. 1 to 10. FIG. 1 is plan view showing a rotary sensor according to the invention, FIG. 2 is a cross-sectional view showing the rotary sensor, FIG. 3 is a cross-sectional view showing the main parts of the rotary sensor, FIG.4 is a perspective view showing a rotator, FIG. 5 is a perspective view showing a first elastic member, FIG. 6 is a side view showing the first elastic member, FIG. 7 is a perspective view showing a second elastic member, FIG. 8 is a side view showing the second elastic member, FIG. 9 is a perspective view showing a driving shaft, and FIG. 10 is a side view showing the driving shaft.

In the drawings, the chassis 1 is made of an insulating material such as a synthetic resin and is formed in a box shape with an upper surface having the opening. A first wide receiving part 1a and a second substantially semicircular receiving part 1b communicating with the first receiving part 1a are provided in the opening of the chassis 1, and a rotator to be described is rotatably received in the second receiving part 1b. Further, a connector socket part 2 for connection is projected toward the outside of the chassis 1 from one end of the circumferential surface of the chassis 1.

A part of mechanical elements (not shown) for a vehicle is received in the first receiving part 1a and the chassis 1 is mounted in the vehicle so that the mechanical elements are connected to a control circuit via the connector socket 2.

The second receiving part 1b is provided with a concave spindle part 1c that rotatably supports a rotator 3 to be described below, and the circumference of the spindle part 1c is provided with a substrate holding part 1d that holds a resistor substrate 8 to be described below. In addition, the upper side of the second receiving part 1b is provided with a plurality of engaging protrusions 1e that is engaged with a lid 10 to be described below.

The rotator 3 is made of an insulating material such as a synthetic resin, and has a substantially circular bearing part 3a and a rectangular sliding-element supporting part 3b extending toward one side of the bearing part 3a from an outer circumferential surface of the bearing part 3a. The bearing part 3a has a cylindrical rotating shaft 3c which is provided on a lower side of the bearing part 3a and is rotatably supported by the concave spindle part 1c, and a guard part 3d which extends toward the upper side of the bearing part 3a. Further, buffer spring engaging parts 3e having concave and convex parts are provided on the upper surface of the guard part 3d.

Furthermore, an engaging hole 3f is formed from the upper surface of the rotating shaft 3c to the vicinity of the bottom face of the rotating shaft 3c. The engaging hole 3f includes a first engaging hole 3g that is elongated in plan view and a second engaging hole 3h that is provided in the direction perpendicular to one longitudinal end of the first engaging hole 3g so as to communicate with the first engaging hole 3g. In addition, two surfaces facing each other in the longitudinal direction of the first engaging hole 3g are flat surfaces parallel to each other, and a longitudinal groove 3i is formed in one flat surface of the two flat surfaces. Moreover, a locking groove 3j having a fine groove is provided in the vicinity of the first engaging hole 3g along the longitudinal direction of the first engaging hole 3g. A plurality of bosses 3k is projected from a lower surface of the sliding-element supporting part 3b.

A first elastic member 4 and a second elastic member 5 are made of elastic metal plates, and are inserted and locked in the first engaging hole 3g and the second engaging hole 3g of the rotator 3. The first elastic member 4 includes a pair of spring pieces 4a and 4a that have elastic contacting portions which is protuberated with a slit 4b therebetween, and a locking piece 4c that is bent so as to face the backside of the spring pieces 4a and 4a. Since the pair of spring pieces 4a and 4a are inserted in the first engaging hole 3g of the rotating shaft 3c and the locking piece 4c is locked in the locking groove 3j, the first elastic member 4 is engaged with the rotator 3.

In addition, the second elastic member 5 is formed in a substantially reverse U-shape, and this includes a spring piece 5a that has an elastic contacting portion and a slightly long locking piece 5b that is bent so as to face the backside of the spring piece 5a. The second elastic member 5 is inserted in the second engaging hole 3h that is provided in the direction perpendicular to one longitudinal end of the first engaging hole 3g so as to communicate with the first engaging hole 3g. The second elastic member 5 is disposed so that the spring pieces 4a and 4a and the spring piece 5a are perpendicular to each other so as to be elastically urged in the direction perpendicular to the first elastic member 4. Thus, the elastic force of the first elastic member 4 becomes greater than that of the second elastic member 5.

Further, a buffer spring 6, which is made of an elastic thin metal plate that has a wavy and annular shape, is locked in the buffer spring engaging parts 3e of the guard part 3d of the rotator 3. The rotator 3 is rotatably arranged between the spindle part 1c in the receiving part 1b of the chassis 1 and the cover 10 under predetermined torque by elastic force of the buffer spring 6.

Furthermore, a sliding-element 7 made of a conductive thin metal plate is fixed to a plurality of the bosses 3k provided on the lower surface of the sliding-element supporting part 3b of the rotator 3. In addition, the resistor substrate 8 having laminated plates made of, for example, phenol resin or epoxy resin is supported in the substrate holding part 1d of the second receiving part 1b of the chassis 1 so as to face the sliding-element 7. The resistor pattern (not shown) printed with, for example, carbon or a conductor pattern (not shown) printed with, for example, silver are formed on the resistor substrate 8, and output is obtained during a desired rotation by bringing the resistor pattern or the conductor pattern into sliding-contact with the sliding-element 7. The rotation detecting means for detecting the rotation of the rotator 3 consists the sliding-element 7 and the resistor substrate 8.

A driving shaft 9 is made of a metal or an insulating material such as a synthetic resin, and has a cylindrical operating part 9a and a transmitting part 9b which projects toward the lower side of the operating part 9a and has two flat surfaces. The driving shaft 9 is engaged with the rotating shaft 3c of the rotator 3 by inserting the transmitting part 9b into the first engaging hole 3g and the second engaging hole 3h so as to elastically contact with the spring pieces 4a and 5a of the first and second elastic members 4 and 5.

In this case, one flat surface of the transmitting part 9b of the driving shaft 9 is elastically urged by the spring pieces 4a of the first elastic member 4 in one direction. The driving shaft 9 is elastically urged by the spring piece 5a of the second elastic member 5 in the direction perpendicular to the one direction. Since the driving shaft 9 is pressed by the first and second elastic members 4 and 5 in the above-mentioned one end direction of the first engaging hole 3g of the rotator 3, the driving shaft 9 is tightly engaged with the rotator 3.

In addition, the driving shaft 9 has a flat surface facing the abutting portion of the first elastic member 4, and has an abutment of the first engaging hole 3g of the rotator 3 engaged with the driving shaft 9 formed as a flat surface. Since the engaging portions between the driving shaft 9 pressed by the first elastic member 4 and the rotator 3 are formed as flat surfaces, the engagement is tight and the followingness of the rotator 3 is improved during the rotation of the driving shaft 9.

In addition, since a concave longitudinal groove 3i is formed in the center of the abutment of the first engaging hole 3g and the center of the abutment engaging with the driving shaft 9 is not projected from the end portion of the abutment, it is possible to prevent a backlash during the reciprocating rotation of the driving shaft 9. Further, since the elastic force of the first elastic member 4 becomes greater than that of the second elastic member 5, it is possible to prevent a clearance occurring between the driving shaft 9 and the first engaging hole 3g of the rotator 3, and to reliably prevent a backlash occurred during the reciprocating rotation of the driving shaft 9.

The lid 10 is made of an insulating material such as a synthetic resin, and has a substantially semicircular shape. The edge of the lid 10 is engaged with the engaging protrusions 1e and closed so as to cover the upper opening of the second receiving part 1a of the chassis 1. Further, a through-hole 10a is provided in the center of the lid 10. The through-hole 10a is formed at a position facing the rotating shaft 3c of the rotator 3 and the rotating shaft 3c is desirably provided in the through-hole 10a. The driving shaft 9 is inserted into the through-hole 10a from the upper portion thereof so that the transmitting part 9b is inserted and combined with the engaging hole 3f of the rotating shaft 3c.

According to the above-mentioned embodiment of the invention, the elastic members which are engaged with the engaging hole 3f of the rotator 3 elastically contacted with the circumferential surface of the driving shaft 9 to transmit the rotation of the driving shaft 9 to the rotator 3 consist of the first elastic member 4 that elastically contacts with one surface of the driving shaft 9 to press it in one direction, and the second elastic member 5 that elastically contacts with another surface perpendicular to the one surface to press the driving shaft 9 in the direction perpendicular to the pressing direction of the first elastic member 4. The abutting portion between the driving shaft 9 and the first elastic member 4 is formed as a flat surface and the elastic contacting portion of the first elastic member 4 is formed as the pair of spring pieces 4a and 4a facing each other with a slit 4b in the center thereof. Since, the driving shaft 9 is pressed in the one direction of the engaging hole 3f of the rotator 3 by the first and the second elastic member 4 and 5, the engagement between the driving shaft and the rotator becomes tight. Further, the slit 4b is provided in the center of the elastic contacting portion of the first elastic member 4, a left portion and a right portion of the elastic contacting portion independently operates as spring pieces 4a and 4a. Therefore, the followingness of the rotation of the driving shaft 9 is improved and the hysteresis is improved.

In addition, the slit 4b is provided in the center of the elastic contacting portion of the first elastic member 4. Since the central portion of the surface of the elastic contacting portion contacting with the abutting surface of the driving shaft 9 is not projected from the end portion, it is possible to prevent a backlash occurred during the reciprocating rotation of the driving shaft 9 and to prevent deterioration of hysteresis.

As mentioned above, the rotary sensor according to the invention includes a chassis having a supporting part, a rotator having an engaging hole and rotatably supported in the chassis, a driving shaft engaged with the engaging hole of the rotator, elastic members held in the engaging holes and transmitting the rotation of the driving shaft to the rotator by elastically contacting with the circumferential surface of the driving shaft, and a rotation detecting means for detecting a rotation of the rotator. The elastic members includes a first elastic member that elastically contacts with to press one surface of the driving shaft in one direction, and a second elastic member that elastically contacts with another surface perpendicular to the one surface and presses the driving shaft in the direction perpendicular to the pressing direction of the first elastic member. A abutting portion between the driving shaft and the first elastic member is formed as a flat surface and an elastic contacting portion of the first elastic member is formed as a pair of spring pieces facing each other with a slit in the center thereof. Since, the driving shaft is pressed in the one direction of the engaging hole of the rotator by the first and the second elastic member, the driving shaft is firmly engaged with the rotator. Also, since the slit is provided in the center of the elastic contacting portion of the first elastic member, a left portion and a right portion of the elastic contacting portion independently operates as springs. Therefore, the followingness of the rotation of the driving shaft is improved and hysteresis is improved. Further, it is possible to prevent a backlash occurred during the reciprocating rotation and to prevent deterioration of hysteresis.

In addition, the driving shaft has a flat surface as a surface facing the abutting portion between the driving shaft and the first elastic member and has a flat surface as an abutment of the engaging hole of the rotator, which is engaged with the abutting portion. Since the engaging part between the driving shaft and the rotator, which is pressed by the first elastic member, is a flat surface, respectively, the engagement is tight and the followingness of the rotation of the driving shaft is improved.

Further, since the concave longitudinal groove is formed in the center of the abutment of the first engaging hole and the central portion of the abutment engaged with the driving shaft is not projected from the end portion of the abutment of the engaging hole, it is possible to prevent a backlash occurred during the reciprocating rotation.

Furthermore, since elastic force of the first elastic member is greater than that of the second elastic member, it is possible to prevent a clearance occurring between the driving shaft and the engaging hole and to reliably prevent a backlash occurred during the reciprocating rotation of the driving shaft.

## Claims

1. A rotary sensor comprising:
a chassis 1 having a supporting part;
a rotator having an engaging hole 3f and rotatably supported in the chassis 1;
a driving shaft 9 engaged with the engaging hole 3f of the rotator 3;
elastic members held in the engaging hole 3f and elastically contacted with the circumferential surface of the driving shaft 9, transmitting the rotation of the driving shaft 9 to the rotator 3; and
a rotation detecting means for detecting a rotation of the rotator 3;
**characterized in that** the elastic members includes a first elastic member 4 that elastically contacts with to press one surface of the driving shaft 9 in one direction, and a second elastic member 5 that elastically contacts with another surface perpendicular to the one surface to press the driving shaft 9 in the direction perpendicular to the pressing direction of the first elastic member 4, and
an abutting portion between the driving shaft 9 and the first elastic member 4 is formed as a flat surface and an elastic contacting portion of the first elastic member 4 is formed as a pair of spring pieces facing each other with a slit 4b in the center thereof.

2. The rotary sensor according to claim 1,
**characterized in that** the driving shaft 9 has a flat surface as a surface facing the abutting portion between the driving shaft 9 and the first elastic member 4, and has a flat surface as an abutment of the engaging hole 3f of the rotator 3, which is engaged with the abutting portion.

3. The rotary sensor according to claim 2,
**characterized in that** a concave longitudinal groove 3i is formed in the center of the abutment of the engaging hole 3f.

4. The rotary sensor according to any one of claims 1 to 3,
**characterized in that** the elastic force of the first elastic member 4 is greater than that of the second elastic member 5.

## Patentansprüche

1. Drehsensor, aufweisend:
ein Chassis (1) mit einem Abstützbereich;
ein Drehglied, das eine Eingriffsöffnung (3f) aufweist und in dem Chassis (1) drehbar abgestützt ist;
eine Antriebswelle (9), die mit der Eingriffsöffnung (3f) des Drehglieds (3) in Eingriff steht;
elastische Elemente, die in der Eingriffsöffnung (3f) gehalten sind und mit der Umfangsfläche der Antriebswelle (9) in elastischer Berührung stehen und die Rotationsbewegung der Antriebswelle (9) auf das Drehglied (3) übertragen; und
eine Rotationserfassungseinrichtung zum Erfassen einer Rotationsbewegung des Drehglieds (3);
**dadurch gekennzeichnet, dass** die elastischen Elemente ein erstes elastisches Element (4), das mit einer Oberfläche der Antriebswelle (9) in elastischer Berührung steht und diese in einer Richtung mit Druck beaufschlagt, sowie ein zweites elastisches Element (5) beinhalten, das mit einer anderen, zu der einen Oberfläche rechtwinkligen Oberfläche in elastischer Berührung steht und die Antriebswelle (9) in der zu der Druckbeaufschlagungsrichtung des ersten elastischen Elements (4) rechtwinkligen Richtung mit Druck beaufschlagt, und
dass ein Anlagebereich zwischen der Antriebswelle (9) und dem ersten elastischen Element (4) als ebene Oberfläche ausgebildet ist und ein elastischer Kontaktierungsbereich des ersten elastischen Elements (4) in Form eines Paares von Federstücken ausgebildet ist, die einander mit einem Schlitz (4b) im Zentrum gegenüberliegen.

2. Drehsensor nach Anspruch 1,
**dadurch gekennzeichnet, dass** die Antriebswelle (9) eine ebene Oberfläche als dem Anlagebereich zwischen der Antriebswelle (9) und dem ersten elastischen Element (4) zugewandt gegenüberliegende Oberfläche aufweist sowie eine ebene Oberfläche als Anlagezone der Eingriffsöffnung (3f) des Drehglieds (3) aufweist, die mit dem Anlagebereich zusammenwirkt.

3. Drehsensor nach Anspruch 2,
**dadurch gekennzeichnet, dass** eine konkave Längsnut (3i) im Zentrum der Anlagezone der Eingriffsöffnung (3f) ausgebildet ist.

4. Drehsensor nach einem der Ansprüche 1 bis 3,
**dadurch gekennzeichnet, dass** die elastische Kraft des ersten elastischen Elements (4) höher ist als die des zweiten elastischen Elements (5).

## Revendications

1. Capteur rotatif comprenant :
un châssis 1 comportant une partie support ;
un rotateur ayant un trou d'assemblage 3f et supporté à rotation dans le châssis 1 ;
un arbre d'entraînement 9 engagé dans le trou d'assemblage 3f du rotateur 3 ;
des éléments élastiques tenus dans le trou d'assemblage 3f et en contact élastique avec la surface périphérique de l'arbre d'entraînement 9, transmettant la rotation de l'arbre d'entraînement 9 au rotateur 3 ; et
un moyen de détection de rotation pour détecter une rotation du rotateur 3 ;
**caractérisé en ce que** les éléments élastiques comprennent un premier élément élastique 4 qui est en contact élastique pour presser une surface de l'arbre d'entraînement 9 dans une direction, et un deuxième élément élastique 5 qui est en contact élastique avec une autre surface perpendiculaire à la première surface pour presser l'arbre d'entraînement 9 dans la direction perpendiculaire à la direction de pressage du premier élément élastique 4, et
une partie d'appui entre l'arbre d'entraînement 9 et le premier élément élastique 4 est formée sous la forme d'une surface plate et une partie de contact élastique du premier élément élastique 4 est formée sous la forme d'une paire de pièces de ressort se faisant face avec une fente 4b au centre.

2. Capteur rotatif selon la revendication 1, **caractérisé en ce que** l'arbre d'entraînement 9 a une surface plate comme surface faisant face à la partie d'appui entre l'arbre d'entraînement 9 et le premier élément élastique 4, et a une surface plate comme appui du trou d'assemblage 3f du rotateur 3, qui est en contact avec la partie d'appui.

3. Capteur rotatif selon la revendication 2, **caractérisé en ce qu'**une rainure longitudinale concave 3i est formée au centre de l'appui du trou d'assemblage 3f.

4. Capteur rotatif selon l'une quelconque des revendications 1 à 3, **caractérisé en ce que** la force élastique du premier élément élastique 4 est supérieure à celle du deuxième élément élastique 5.
